# EUROPÄISCHE PATENTANMELDUNG

(11) **EP 3 489 388 A1**
(43) Veröffentlichungstag der Anmeldung: **29.05.2019**
(21) Anmeldenummer: 17203520.6
(22) Anmeldetag: 24.11.2017
(51) Int. Cl.: C25B 1/10, C25B 9/08, C25B 15/08

(54) **GASZWISCHENSPEICHER, ELEKTROLYSEANLAGE UND VERFAHREN ZUR PROTONEN-AUSTAUSCH-ELEKTROLYSE**

(71) Anmelder: Siemens Aktiengesellschaft, 80333 München (DE)
(72) Erfinder: Wolf, Erik, 91341 Röttenbach (DE)

(57) **Zusammenfassung**

Die Erfindung betrifft einen Gaszwischenspeicher (10) für eine Elektrolyseanlage (12) zur Niederdruck-Protonen-Austausch-Elektrolyse, mit einem Speicherbehältnis (14), in welches ein Kanal (16) einer Gasentnahmeeinheit (18) mündet, über welchen während der Elektrolyse erzeugtes Gas (20) in das Speicherbehältnis (14) einleitbar ist, wobei das Speicherbehältnis (14) wenigstens ein Druckelement (22) umfasst, mittels welchem das in das Speicherbehältnis (14) eingeleitete Gas (20) mit einem Druck beaufschlagt ist. Ferner betrifft die Erfindung eine Elektrolyseanlage (12) mit dem Gaszwischenspeicher (10) sowie ein Verfahren zum Betreiben der Elektrolyseanlage (12).

## Beschreibung

Die Erfindung betrifft einen Gaszwischenspeicher für eine Elektrolyseanlage zur Niederdruck-Protonen-Austausch-Elektrolyse gemäß dem Patentanspruch 1, sowie eine Elektrolyseanlage zur Niederdruck-Protonen-Austausch-Elektrolyse gemäß dem Patentanspruch 5 und ein Verfahren zum Betreiben einer Elektrolyseanlage für die Protonen-Austausch-Elektrolyse gemäß dem Oberbegriff von Patentanspruch 6.

Bei einer Elektrolyse wird mittels elektrischen Stroms eine chemische Reaktion, insbesondere eine Redoxreaktion, angestoßen, wobei elektrische Energie in chemische Energie umgewandelt wird. Die dafür benötigte elektrische Energie liefert eine Gleichspannungsquelle, welche zwei elektrische Pole, eine Anode und eine Kathode, aufweist. Durch zwei Elektroden, die Anode und die Kathode, wird ein elektrischer Gleichstrom in einen leitenden Elektrolyten, beispielsweise eine leitende Flüssigkeit, geleitet. Bei einer Protonen-Austausch-Elektrolyse (PEM-Elektrolyse) erfolgt die Leitung zumindest teilweise durch eine Protonen-Austausch-Membran, welche für positiv geladene Protonen durchlässig ist. An den Elektroden entstehen durch die Elektrolyse, das heißt durch Leiten des Gleichstroms der Gleichspannungsquelle, beispielsweise mittels Protonen, von der einen zur anderen Elektrode, Reaktionsprodukte der elektrochemischen Reaktion aus den im Elektrolyten beziehungsweise der Flüssigkeit enthaltenen Stoffen beziehungsweise Elementen.

Die Gleichspannungsquelle bewirkt einen Elektronenmangel in der mit dem Pluspol verbundenen Elektrode, der Anode, und einen Elektronenüberschuss in der mit dem Minuspol verbundenen Elektrode, der Kathode. An der Kathode nehmen elektroneutrale oder positiv geladene Stoffe Elektronen auf und werden dadurch reduziert. An der Anode erfolgt die Abgabe von Elektronen in die Elektrode beziehungsweise Anode, wobei der Stoff beziehungsweise die Stoffe dort oxidiert werden können.

Eine häufige Form der Elektrolyse ist die Wasserelektrolyse, mittels welcher einer Zerlegung von Wasser in Wasserstoff und Sauerstoff stattfindet, wobei eine einfache Reaktionsgleichung 2H₂0 -> 2H₂ + O₂ lauten kann. Dies kann mittels Protonen-Austausch-Elektrolyse (PEM-Elektrolyse aus dem Englischen Proton Exchange Membrane Electrolysis) erfolgen, dabei wird Wasser in einer Elektrolysezelle mit einem festen Polymerelektrolyten gespaltet. Der Polymerelektrolyt, genauer eine Polymer-Elektrolyt-Membran beziehungsweise die Proton-Austausch-Membran, ist dabei für die Leitung von Protonen, den Wasserstoffionen, die Trennung von Produktgasen und die elektrische Isolierung der Elektroden verantwortlich. Als Produktgase entstehen bei der Niederdruck-PEM-Elektrolyse molekularer Sauerstoff O₂ sowie molekularer Wasserstoff H₂ aus Wasser H₂O. Die Polymer-Elektrolyt-Membran weist aufgrund ihrer festen Struktur eine geringe Gasübertragungsrate auf, was zu einer sehr hohen Produktgasreinheit führt. Die Aufrechterhaltung einer hohen Gasreinheit ist wichtig für die Lagersicherheit und den direkten Einsatz des Produktgases beispielsweise in einer Brennstoffzelle.

Die Wasserelektrolyse mittels PEM-Elektrolyse ist beispielsweise aufgrund von dynamischen Reaktionszeiten und hohen Wirkungsgraden eine vielversprechende Technologie zur Energiespeicherung in Verbindung mit erneuerbaren Energiequellen. So kann sie beispielsweise bei den sogenannten Power-to-Gas-Konzepten bei über dem Bedarf liegenden temporären Stromüberschüssen, beispielsweise bei der Produktion erneuerbarer Energie, überschüssigen Strom in Form von Energie speichern.

Aufgabe der vorliegenden Erfindung ist es, eine Vorrichtung und ein Verfahren bereitzustellen, mittels welcher eine Elektrolyseanlage zur Niederdruck-Protonen-Austausch-Elektrolyse eine besonders hohe Gasreinheit der Produktgase realisieren kann.

Diese Aufgabe wird durch einen Gaszwischenspeicher mit den Merkmalen des Patentanspruchs 1, eine Elektrolyseanlage mit den Merkmalen des Patentanspruchs 6 sowie ein Verfahren mit den Merkmalen des Patentanspruchs 7 gelöst. Vorteilhafte Ausgestaltungen mit zweckmäßigen Weiterbildungen der Erfindung sind in den übrigen Ansprüchen angegeben.

Ein erster Aspekt der Erfindung betrifft einen Gaszwischenspeicher für eine Elektrolyseanlage zur Niederdruck-Protonen-Austausch-Elektrolyse (Niederdruck-PEM-Elektrolyse), mit einem Speicherbehältnis. Um eine besonders hohe Gasreinheit eines Produktgases zu erzielen, mündet in das Speicherbehältnis ein Kanal einer Gasentnahmeeinheit, über welchen während der Elektrolyse erzeugtes Gas, das Produktgas, in das Speicherbehältnis einleitbar ist, wobei das Speicherbehältnis wenigstens ein Druckelement umfasst, mittels welchem das in das Speicherbehältnis eingeleitete Gas mit einem Druck beaufschlagt ist.

Mit anderen Worten ist der Gaszwischenspeicher derart ausgebildet, dass Produktgas, insbesondere Wasserstoff, welches während der Niederdruck-PEM-Elektrolyse erzeugt wird, in den Gaszwischenspeicher, insbesondere in das Speicherbehältnis, einströmen beziehungsweise eingeleitet werden kann. Dies geschieht über den Kanal der Gasentnahmeeinheit, welcher zumindest mittelbar fluidisch leitend mit dem Speicherbehältnis des Gaszwischenspeichers verbunden ist. Die Gasentnahmeeinheit verbindet zumindest einen Teilbereich einer Elektrolysezelle, welcher das Produktgas beinhaltet fluidisch leitende mit dem Gaszwischenspeicher. Sind mehrere Elektrolysezellen zu einem Elektrolysemodul zusammengefasst, kann die Gasentnahmeeinheit die Gesamtheit der Teilbereiche, welche das Produktgas beinhalten, fluidisch verbinden. Dabei ist die Gasentnahmeeinrichtung derart der Elektrolysezelle beziehungsweise dem Elektrolysemodul zugeordnet, das sie das Produktgas auf einer Seite einer Proton-Austausch-Membran, das heißt entweder auf der Seite, welche eine Anoden oder eine Kathode aufweist. Das jeweilige Produktgas kann mittels der Gasentnahmeeinheit über den Kanal in den Gaszwischenspeichers strömen beziehungsweise leitbar sein. Der Gaszwischenspeicher, insbesondere dessen Speicherbehältnis mit dem Druckelement, ist nun derart ausgebildet, dass ein Druckabfall wenigstens in dem in Strömungsrichtung des erzeugten Produktgases stromaufwärts liegenden Kanal beziehungsweise der Gasentnahmeeinheit und somit in der Elektrolysezelle beziehungsweise dem Elektrolysemodul der Elektrolyseanlage verhindert beziehungsweise besonders gering gehalten werden kann. Somit kann beispielsweise ein Fremdgaseinbruch in die Elektrolyseanlage vermieden werden, wodurch die Gasreinheit des Produktgases, insbesondere Wasserstoff, erhöht werden kann. Durch den erfindungsgemäßen Gaszwischenspeicher kann eine Einlagerung von Fremdgas in einen beispielweise nach dem Gaszwischenspeicher stromabwärts liegend angeordneten Tank verhindert werden. Der Gaszwischenspeicher kann für eine Aufrechterhaltung eines Überdrucks gegenüber der Umgebung der Elektrolyseanlage dienen. Dies wird durch das mittels des Druckelements mit dem Druck beaufschlagte Gas im Speicherbehältnis realisiert. Die Elektrolyseanlage kann als Elektrolyseur bezeichnet werden.

Der Erfindung liegt die Erkenntnis zugrunde, dass bei der Niederdruck-Protonen-Austausch-Elektrolyse aufgrund des niedrigen Gasdrucks, insbesondere für einen Transport des Gases, große Querschnitte für Kanäle beziehungsweise Rohre zum Transport des Gases benötigt werden. Nach beispielsweise Produktionsstillständen muss sichergestellt sein, dass die H₂-führenden Rohre keinen Sauerstoff beispielsweise über Leckagestellen oder rückwärtige Strömungen beinhalten. Eine Leckagestelle beziehungsweise ein Fremdgaseinbruch kann beispielsweise durch undichte Stellen in den gesamten miteinander fluidisch leitend verbundenen Komponenten, wie der Elektrolysekammer der Elektrolyseanlage sowie in dem Gaszwischenspeicher auftreten. Rückwärtige Strömungen können beispielsweise nach Lastphasen auftreten. Speziell nach längeren Lastphasen und daraus resultierenden hohen Gastemperaturen von beispielsweise über 20 Grad Celsius, kann es aufgrund eines darauffolgenden Produktionsstillstands durch Abkühlung des Produktgases und einer Kondensation von Wasserdampf zu einer Volumenreduktion und damit zu einem Druckabfall kommen. Würde ein Druckabfall in dem Maße stattfinden, dass der Druck in der Elektrolysezelle und/oder dem Elektrolysemodul beziehungsweise dem Elektrolyseur gegenüber einem Umgebungsdruck niedriger ist, ist die Gefahr eines Fremdgaseinbruchs (beispielsweise O₂) gegeben. Die Bildung eines zündfähigen Wasserstoff-Sauerstoff-Gemischs aufgrund eines Fremdgaseinbruchs kann durch den Überdruck verhindert werden. Im Hinblick auf eine Stromproduktion mittels erneuerbare Energien sind fluktuierende Energiemengen wahrscheinlich, wodurch häufig Produktionsunterbrechungen zu erwarten sind.

Mittels des erfindungsgemäßen Gaszwischenspeicher für die Niederdruck-PEM-Elektrolyse, welcher über die Gasentnahmeeinheit an einer Gasaustrittsseite des Elektrolyseurs angeschlossen ist, ist durch die Beaufschlagung des in ihn eingeleitete Gases beziehungsweise Produktgases ein gasentnahmeseitiger Überdruck gewährleistbar. Durch diesen Überdruck wird ein Unterdruck beziehungsweise ein Fremdgaseinbruch weniger wahrscheinlich, was sich positiv auf die Gasreinheit auswirkt.

In vorteilhafter Ausgestaltung der Erfindung ist das Speicherbehältnis in Strömungsrichtung des erzeugten Gases stromabwärts liegend fluidisch leitend mit einer Gasabnahmeeinrichtung und/oder einer Verdichtereinrichtung verbunden und/oder zumindest eines des wenigstens einen Druckelements derart angeordnet, dass eine Weitergabe von Druckschwankungen durch das Speicherbehältnis hindurch dämpfbar ist. Das heißt, mittels des wenigstens einen Druckelements kann eine Weitergabe von Druckschwankungen, welche im Kanal und/oder der Gasabnahmeeinrichtung und/oder der Verdichtereinrichtung auftreten, durch das Speicherbehältnis hindurch dämpfbar beziehungsweise verringerbar sein. Mit anderen Worten können mittels des erfindungsgemäßen Gaszwischenspeichers Druckschwankungen von einem in Strömungsrichtung gesehen nachfolgenden Verdichtereinrichtung und/oder einem Gasabnahmeeinrichtung von dem in Strömungsrichtung stromaufwärts liegenden Kanal entkoppelt werden. Dabei ist der Gaszwischenspeicher beziehungsweise dessen Speicherbehältnis, welches das Druckelement aufweist, derart ausgebildet, dass die Entkopplung beziehungsweise die Dämpfung der Druckschwankung sowohl von der stromaufwärts liegenden zur stromabwärts liegenden Seite, als auch von der stromabwärts liegenden zur stromaufwärts liegenden Seite erfolgen kann. Hierdurch ergibt sich beispielsweise, dass ein Tank, welchen die stromabwärts liegende Gasabnahmeeinrichtung aufweist, besonders gleichmäßig befüllt werden kann. Des Weiteren kann dadurch eine Druckschwankung infolge der nachgeschalteten Verdichtereinrichtung gedämpft werden, um diese Druckschwankungen von der Gasabnahmeeinrichtung des Elektrolyseurs beziehungsweise der Elektrolysezelle beziehungsweise des Elektrolysemoduls zu entkoppeln. Je geringer Druckschwankungen in der Elektrolyseanlage ausfallen, desto stabiler kann der Elektrolyseprozess ablaufen, wodurch die Gasreinheit auf einem stabilen Wert gehalten werden kann.

In vorteilhafter Ausgestaltung der Erfindung ist das Speicherbehältnis als Membranspeicher ausgebildet. Dabei kann die Membran des Membranspeichers zumindest teilweise als Druckelement dienen. Dabei funktioniert der Membranspeicher vergleichbar einem Gasometer als Druckausgleichsgerät, mittels welchem beispielsweise eine Dämpfung der Druckschwankungen besonders einfach realisierbar ist. Durch die Ausbildung des Gaszwischenspeichers beziehungsweise des Speicherbehältnisses als Membranspeicher ist eine besonders einfache und dadurch kostengünstige Realisierung des Gaszwischenspeichers möglich, da insbesondere das Druckelement durch die Membran ausgebildet werden kann.

In vorteilhafter Ausgestaltung der Erfindung ist eine Drucküberwachungsvorrichtung stromabwärts der Gasentnahmeeinheit angeordnet. Durch diese Drucküberwachungsvorrichtung ist es beispielsweise in besonders vorteilhafter Weise möglich, den Gasdruck in dem Kanal und somit auch am Entstehungsort des Gases in der Elektrolysezelle beziehungsweise dem Elektrolysemodul zu überwachen, womit beispielsweise ein Druckabfall, insbesondere in einem Bereich unterhalb des Umgebungsdrucks, erkennbar ist. Dabei kann die Drucküberwachungsvorrichtung beispielsweise ein Warnelement, welches beispielsweise akustische und/oder optische Warnsignale aussendet, umfassen, sodass auf einen Druckabfall besonders schnell reagiert werden kann, wodurch innerhalb einer besonders kurzen Zeitspanne Maßnahmen ergriffen werden können, um eine besonders hohe Gasreinheit des Produktionsgases, insbesondere des molekularen Wasserstoffs, zu gewährleisten.

In vorteilhafter Ausgestaltung der Erfindung ist ein Volumen des Speicherbehältnisses zum zumindest Zwischenspeicher des Gases größer als ein Volumen, welches von dem erzeugten Gas in der mit dem Gaszwischenspeicher verbundenen Elektrolyseanlage, insbesondere in der Elektrolysezelle beziehungsweise dem Elektrolysemodul, einnehmbar ist. Mit anderen Worten ist der Gaszwischenspeicher, welcher direkt von der Elektrolyse gespeist wird, beziehungsweise dessen Gasvolumen so groß gewählt, dass ein, insbesondere vollständiger, Ausgleich des von der Elektrolyseanlage eingeschlossenen Volumens sichergestellt werden kann, wodurch ein permanenter Systemüberdruck beziehungsweise ein über einen möglichst langen Zeitraum haltbarer Systemüberdruck gewährleistet werden kann. Daraus ergibt sich eine besonders geringes Risiko eines Fremdgaseinbruchs in das Produktgas, beispielsweise den molekularen Wasserstoff oder den molekularen Sauerstoff.

Ein zweiter Aspekt der Erfindung betrifft eine Elektrolyseanlage für eine Niederdruck-Protonen-Austausch-Elektrolyse, mit einem erfindungsgemäßen Gaszwischenspeicher.

Ein dritter Aspekt der Erfindung betrifft ein Verfahren zum Betreiben einer Elektrolyseanlage für die Niederdruck-Protonen-Austausch-Elektrolyse. Um die Elektrolyseanlage mittels des Verfahrens besonders vorteilhaft zu betreiben und somit eine besonders große Gasreinheit des Produktgases, insbesondere des Wasserstoffs, zu erreichen, wird mittels des erfindungsgemäßen Verfahrens während der Elektrolyse erzeugtes Gas über einen Kanal einer Gasentnahmeeinheit, welcher in ein Speicherbehältnis eines Gaszwischenspeichers mündet, in das Speicherbehältnis eingeleitet. Das in das Speicherbehältnis eingeleitete Gas wird mittels eines Druckelements des Speicherbehältnisses mit einem Druck beaufschlagt.

Vorteile und vorteilhafte Ausgestaltungen des ersten Aspekts der Erfindung sind als Vorteile und vorteilhafte Ausgestaltungen des zweiten beziehungsweise dritten Aspekts der Erfindung anzusehen und umgekehrt.

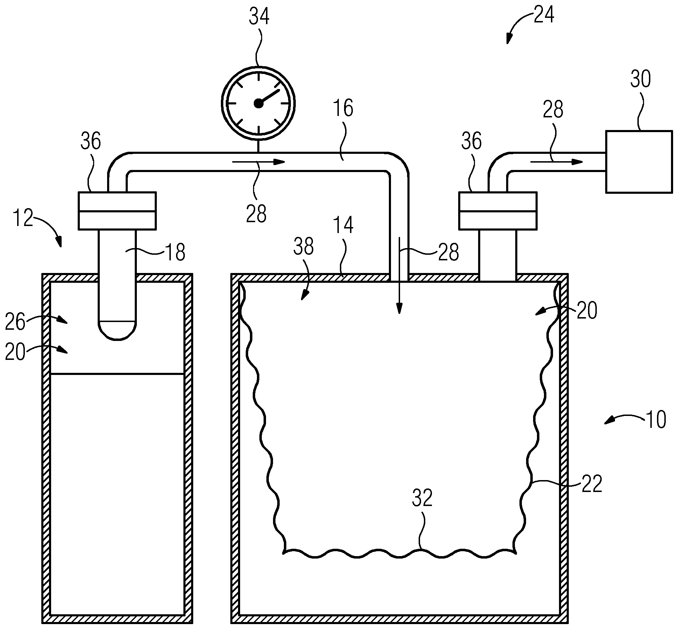

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in der einzigen Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die einzige Figur zeigt einen erfindungsgemäßen Gaszwischenspeicher für eine Elektrolyseanlage zur Niederdruck-Protonen-Austausch-Elektrolyse mit einem Speicherbehältnis.

Die FIG zeigt einen Gaszwischenspeicher 10 für eine Elektrolyseanlage 12 zur Niederdruck-Protonen-Austausch-Elektrolyse (Niederdruck-PEM- Elektrolyse) mit einem Speicherbehältnis 14. Mittels des Gaszwischenspeichers 10 kann die PEM-Elektrolyseanlage 12, welche eine Elektrolyse von Wasser H₂O in molekularen Sauerstoff O₂ und molekularen Wasserstoff H₂ durchführt, um das jeweilige Produktgas O₂ beziehungsweise H₂ zu erhalten, ein besonders reines jeweiliges Produktgas bereitstellen. Dazu mündet ein Kanal 16 einer Gasentnahmeeinheit 18 in das Speicherbehältnis 14. Über den Kanal 16 ist während der Elektrolyse erzeugtes Gas 20, sogenanntes Produktgas, in das Speicherbehältnis 14 einleitbar, wobei das Speicherbehältnis 14 wenigstens ein Druckelement 22 umfasst, mittels welchem das in das Speicherbehältnis eingeleitete Gas 20 mit einem Druck beaufschlagt ist. Der Gaszwischenspeicher 10 dient zur Vermeidung eines Fremdgaseinbruchs beziehungsweise zur Aufrechterhaltung eines Überdrucks gegenüber einer Umgebung 24 der Elektrolyseanlage 12. So kann mittels des Gaszwischenspeichers 10 beispielsweise bei einer Leckage, das heißt einer undichten Stelle, welche fluidleitend mit dem Gasvolumen 26, welches von dem erzeugten Gas 20 in der Elektrolyseanlage 12 einnehmbar ist, mittels eines Überdrucks, welcher insbesondere von dem Druckelement 22 erzeugt wird, das Einströmen eines prozessfremden Gases vermieden werden.

Im gezeigten Ausführungsbeispiel ist das Speicherbehältnis 14 in Strömungsrichtung 28 des erzeugten Gases 20 stromabwärts liegend fluidisch leitend mit einer Gasabnahmeeinrichtung 30 verbunden, wobei mittels des wenigstens einen Druckelements 22 eine Weitergabe von Druckschwankungen, welche im Kanal 16 und/oder der Gasabnahmeeinrichtung 30 auftreten, durch das Speicherbehältnis 14 hindurch dämpfbar ist. Alternativ kann anstelle beziehungsweise zusätzlich zu der Gasabnahmeeinrichtung 30 eine nicht gezeigte Verdichtereinrichtung fluidisch leitend mit dem Speicherbehältnis 14 verbunden sein.

In der gezeigten Ausführungsform ist das Speicherbehältnis 14 als Membranspeicher mit einer Membran 32 ausgebildet, wobei die Membran 32 zumindest teilweise das Druckelement 22 ausbildet. Ferner weist die gezeigte Ausführungsform des Gaszwischenspeichers 10 eine Drucküberwachungsvorrichtung 34 auf, welche stromabwärts der Gasentnahmeeinheit 18 und zusätzlich stromaufwärts des Speicherbehältnisses 14 in dem Kanal 16 angeordnet ist. Mittels der Drucküberwachungsvorrichtung 34 kann beispielsweise überwacht werden, ob eine Aufrechterhaltung eines Überdrucks gegenüber der Umgebung 24 in der Elektrolyseanlage 12 beziehungsweise dem Gasspeicher 10 eingehalten wird, sodass ein Fremdgaseinbruch beispielsweise aus der Umgebung 24 vermieden werden kann. Dazu kann die Drucküberwachungsvorrichtung 34 beispielsweise veranlassen, dass jeweilige Ventile 36 von einer Offenstellung, bei welcher das Gas 20 durch das jeweilige Ventil 36 strömen kann, in eine Schließstellung, bei welcher der Gasfluss gestoppt ist, bewegt werden.

In der gezeigten Ausführungsform ist ein Volumen 38 des Speicherbehältnisses 14, welches zum Aufnehmen des Gases 20, welches durch die Elektrolyse erzeugt wird, größer als das Volumen, das sogenannte Gasvolumen 26, der Elektrolyseanlage 12, insbesondere einer Elektrolysezelle beziehungsweise eines Elektrolysemoduls der Elektrolyseanlage 12. Somit kann der Gaszwischenspeicher 10, welcher von dem bei der Elektrolyse erzeugten Gas 20 gespeist wird, über einen möglichst langen Zeitraum sicherstellen, dass ein Überdruck in den fluidisch leitend mit dem Kanal 16 verbundenen Bereichen der Elektrolyseanlage 12, wie beispielsweise dem Gasvolumen 26, ein Überdruck, insbesondere im Gegensatz zur Umgebung 24, aufrechterhalten werden kann. Mittels der gezeigten Ausführungsform des Gaszwischenspeichers 10 für eine Niederdruck-Protonen-Austausch-Elektrolyse mit der gezeigten Elektrolyseanlage 12 kann ein Verfahren zum Betreiben der Elektrolyseanlage 12 durchgeführt werden, wobei während der Elektrolyse über den Kanal 16 der Gasentnahmeeinheit 18, welcher in das Speicherbehältnis 14 des Gaszwischenspeichers 10 mündet, erzeugtes Gas 20 in das Speicherbehältnis 14 eingeleitet werden und das in das Speicherbehältnis 14 eingeleitete Gas 20 mittels eines Druckelements 22, der Membran 32, des Speicherbehältnisses 14 mit einem Druck beaufschlagt werden.

## Patentansprüche

1. Gaszwischenspeicher (10) für eine Elektrolyseanlage (12) zur Niederdruck-Protonen-Austausch-Elektrolyse, mit einem Speicherbehältnis (14), in welches ein Kanal (16) einer Gasentnahmeeinheit (18) mündet, über welchen während der Elektrolyse erzeugtes Gas (20) in das Speicherbehältnis (14) einleitbar ist, wobei das Speicherbehältnis (14) wenigstens ein Druckelement (22) umfasst, mittels welchem das in das Speicherbehältnis (14) eingeleitete Gas (20) mit einem Druck beaufschlagt ist.

2. Gaszwischenspeicher (10) nach Anspruch 1, **dadurch gekennzeichnet, dass** das Speicherbehältnis (14) in Strömungsrichtung (18) des erzeugten Gases (20) stromabwärts liegend fluidisch leitend mit einer Gasabnahmeeinrichtung (30) und/oder einer Verdichtereinrichtung verbunden ist und/oder zumindest eines des wenigstens einen Druckelements (22) derart angeordnet ist, dass eine Weitergabe von Druckschwankungen durch das Speicherbehältnis (14) hindurch dämpfbar ist.

3. Gaszwischenspeicher (10) nach Anspruch 1 oder 2, **dadurch gekennzeichnet, dass** das Speicherbehältnis (14) als Membranspeicher ausgebildet ist.

4. Gaszwischenspeicher (10) nach einem der vorhergehenden Ansprüche, **dadurch gekennzeichnet, dass** eine Drucküberwachungsvorrichtung (34) stromabwärts der Gasentnahmeeinheit (18) angeordnet ist.

5. Gaszwischenspeicher (10) nach einem der vorhergehenden Ansprüche, **dadurch gekennzeichnet, dass** ein Volumen (38) des Speicherbehältnis (14) zum zumindest Zwischenspeichern des Gases (20) größer ist als ein Volumen (26), welches von dem erzeugten Gas (20) in der mit dem Gaszwischenspeicher (10) verbundenen Elektrolyseanlage (12) einnehmbar ist.

6. Elektrolyseanlage (12) für eine Niederdruck-Protonen-Austausch-Elektrolyse, mit zumindest einem Gaszwischenspeicher (10) nach einem der vorhergehenden Ansprüche.

7. Verfahren zum Betreiben einer Elektrolyseanalage (12) für die Niederdruck-Protonen-Austausch-Elektrolyse, **dadurch gekennzeichnet, dass** während der Elektrolyse über einen Kanal (16) einer Gasentnahmeeinheit (18), welcher in ein Speicherbehältnis (14) eines Gaszwischenspeichers (10) mündet, erzeugtes Gas (20) in das Speicherbehältnis (14) eingeleitet wird und das in das Speicherbehältnis (14) eingeleitete Gas (20) mittels eines Druckelements (22) des Speicherbehältnisses (14) mit einem Druck beaufschlagt wird.
